**Europäisches Patentamt**

**European Patent Office**

**Office européen des brevets**

(19)

(11) **EP 0 714 995 B1**

(12) **FASCICULE DE BREVET EUROPEEN**

(45) Date de publication et mention
de la délivrance du brevet:
**12.07.2000 Bulletin 2000/28**

(51) Int Cl.⁷: **C22C 38/14**, C21C 7/06

(21) Numéro de dépôt: **95402512.8**

(22) Date de dépôt: **10.11.1995**

(54) **Procédé d'élaboration d'un acier au titane et acier obtenu**

Verfahren zum Herstellen titanhaltiger Stähle und nach diesem Verfahren hergestellte Stähle

Method for making titanium-containing steels and steels thus made

(84) Etats contractants désignés:
**AT BE CH DE DK ES FR GB GR IE IT LI LU NL PT SE**

(30) Priorité: **30.11.1994 FR 9414346**

(43) Date de publication de la demande:
**05.06.1996 Bulletin 1996/23**

(73) Titulaire: **CREUSOT LOIRE INDUSTRIE (Société Anonyme)
F-92800 Puteaux (FR)**

(72) Inventeurs:
• **Beguinot, Jean
F-71200 Le Creusot (FR)**
• **Beau, Jean-Luc
F-71200 Le Creusot (FR)**
• **Nectoux, Marie-Luce
F-71200 Le Creusot (FR)**

(74) Mandataire: **Ventavoli, Roger
TECHMETAL PROMOTION (Groupe USINOR),
Immeuble " La Pacific "
11/13 Cours Valmy
La Défense 7,
TSA 10001
92070 Paris La Défense Cédex (FR)**

(56) Documents cités:
**EP-A- 0 177 851        EP-A- 0 337 114
EP-A- 0 589 424**

• **STEEL IN TRANSLATION, vol. 22, no. 5, Mai 1992 LONDON GB, pages 216-217, V. P. KIRILENKO ET AL. 'Features of production .....'**
• **DATABASE WPI Section Ch, Week 9404 Derwent Publications Ltd., London, GB; Class M27, AN 94-033187 & SU-A-1 786 109 (FERROUS METALLURGY INST) , 7 Janvier 1993**

**Description**

La présente invention concerne un procédé d'élaboration d'un acier au Titane.

L'addition de Titane aux aciers en général et aux aciers faiblement alliés en particulier est un moyen bien connu pour contrôler le grain austénitique à haute température, par exemple dans les zones affectées par la chaleur lors d'opération de soudage, et le cas échéant pour durcir la structure obtenue après traitement thermique ou thermomécanique.

Pour fabriquer ces aciers, on élabore un acier liquide exempt de Titane, on désoxyde énergiquement l'acier liquide, par exemple par addition d'Aluminium puis on ajoute des blocs de Ferrotitane qui se dissolvent progressivement.

Au cours de la dissolution des blocs de Ferrotitane, le Titane réagit avec l'Azote contenu dans l'acier et forme des précipités relativement gros (leur taille est de l'ordre de 1 µm ou plus). Ce sont ces précipités qui, après solidification de l'acier, bloquent la croissance des grains austénitiques.

Mais, ces précipités ont plusieurs inconvénients parce qu'ils sont anguleux, relativement gros et de ce fait relativement peu nombreux : leur effet de durcissement et d'affinement de la microstructure est limité et ils détériorent la résilience de l'acier.

Dans STEEL IN TRANSLATION, vol 22, no. 5, Mai 1992, pages 216-217, V.P.KIRILENKO et al, rapportent les résultats d'une étude sur les conditions à respecter pour introduire de 0,05 à 0,09 % de titane dans un acier pour tubes de façon économique. Le procédé consiste à verser l'acier liquide contenu dans un convertisseur, dans une poche dans laquelle on a, au préalable, versé un laitier synthétique contenant du titane et ajouté de l'aluminium. La désoxydation et l'alliage de l'acier se fait pendant que l'acier est versé dans la poche. Afin de maitriser la teneur en titane de l'acier, il est necessaire de tenir compte des teneurs en oxygène et azote, en effet, le titane peut se combiner avec l'oxygène et l'azote pour former des oxydes et de nitrures qui peuvent décanter. De ce point de vue, lorsque la teneur en titane est comprise entre 0,09 et 0,12 %, la teneur en azote ne doit pas excéder 0,08 à 0,1 %, et la teneur en oxygène ne doit pas excéder 0,0013 à 0,0015 %, avec une teneur en aluminium de 0,03 à 0,06 %. Les auteurs constatent que, malgré tout, pour maîtriser la teneur finale en titane de l'acier, il est nécessaire d'ajuster sa teneur ultérieurement et de prendre des précautions pour éviter le contact de l'acier liquide avec l'air. Ce procédé est donc difficile à maîtriser. De plus, il n'évite pas la formation de nitrures et d'oxydes de titane dans l'acier liquide.

Par ailleurs, il a été proposé, notamment dans EP 0 177 851, de fabriquer des aciers faiblement alliés au Titane, à très basse teneur en Aluminium, dans lesquels le Titane est sous forme d'oxydes. Ces oxydes servent de sites privilégiés pour la germination de la ferrite lors des transformations d'austénite en ferrite/perlite ; ils conduisent ainsi à un affinement des structures ferrito-perlitiques qui améliore très sensiblement la résilience, notamment des joints soudés. Mais cette technique présente plusieurs inconvénients : elle nécessite une très basse teneur en Aluminium ce qui est nuisible au contrôle du grain austénitique lors des traitements thermiques et nécessite un temps de coulée et un temps de solidification très courts ce qui complique la fabrication ; elle n'a d'effet que sur les structures ferrito-perlitiques.

Le but de la présente invention est de remédier à ces inconvénients en proposant un procédé pour la fabrication d'acier au Titane ne contenant ni oxydes de Titane ni gros nitrures formés dans l'acier liquide.

A cet effet, l'invention a pour objet un procédé d'élaboration d'un acier au Titane selon les revendications indépendantes 1 et 3.

L'invention concerne également un acier obtenu par le procédé selon l'invention et défini à la revendication indépendante 6.

De préférence l'acier contient plus de 0,01% d'au moins un élément pris parmi Aluminium et Zirconium, mais moins de 0,5% d'Aluminium et moins de 0,5 % de Zirconium.

De préférence la composition chimique, en poids, de l'acier satisfait aux relations :

$$0{,}003\% \leq N \leq 0{,}02\%$$

$$0{,}010\% \leq Ti \leq 0{,}1\%$$

$$(N\%) \times (Ti\%) \leq 0{,}0016$$

L'invention concerne notamment un acier dont la composition chimique, en poids, comprend :

$$0,04\% \leq C \leq 0,80\%$$

$$0\% \leq Si \leq 2\%$$

$$0\% \leq Mn \leq 3\%$$

$$0\% \leq Ni \leq 10\%$$

$$0\% \leq Cr \leq 10\%$$

$$0\% \leq Mo \leq 3\%$$

$$0\% \leq Cu \leq 2\%$$

$$0\% \leq V \leq 1\%$$

$$0\% \leq Nb \leq 0,5\%$$

$$0\% \leq W \leq 3\%$$

$$0\% \leq S \leq 0,2\%$$

$$P \leq 0,03\%$$

et, éventuellement, au moins un élément pris parmi Ca, Mg, Se, Te, Bi, et B, en des teneurs inférieures à 0,1%, le reste étant du fer et des impuretés résultant de l'élaboration.

L'invention concerne enfin une pièce ou produit sidérurgique en acier selon l'invention dont la structure contient au moins 30% de Bainite.

L'invention va maintenant être décrite plus en détail en regard des figures annexées, dans lesquelles :

- la figure 1 est une micrographie électronique au grossissement 1500 d'un acier au Titane selon l'art antérieur et ayant une structure bainitique.
- la figure 2 est une micrographie électronique au grossissement 5000 d'un acier au Titane selon l'art antérieur et ayant une structure bainitique.
- la figure 3 est une micrographie électronique au grossissement 1500 d'un acier selon l'invention ayant une structure bainitique.
- la figure 4 est une micrographie électronique au grossissement 5000 d'un acier selon l'invention ayant une structure bainitique.
- la figure 5 représente deux courbes de transition de résilience (en énergie de rupture) correspondant à un acier selon l'invention et à un acier au Titane selon l'art antérieur.
- la figure 6 représente les deux courbes de résilience en cristallinité correspondant aux deux courbes précédentes.

L'invention concerne les aciers en général et plus particulièrement les aciers faiblement alliés dont la composition chimique, en poids, comprend principalement :

- du Carbone, entre 0,04% et 0,8%

- entre 0% et 2% de Silicium, entre 0,1% et 3% de Manganèse, de 0% à 10% de Nickel, de 0% à 10% de Chrome, de 0% à 3% de Molybdène, de 0% à 2% de Cuivre, de 0% à 1% de Vanadium, de 0% à 0,5% de Niobium,
- de l'Azote, plus de 0,003% et de préférence entre 0,005% et 0,02%.
- du Titane, plus de 0,005% et de préférence entre 0,010% et 0,1%.
- au moins un élément désoxydant plus réducteur que le Titane, tel que l'Aluminium, le Zirconium, le Calcium, le Magnésium, le Cérium, le Lithium, le Thorium et le Béryllium.

Le reste est constitué de Fer et d'impuretés résultant de l'élaboration.

Tous ces éléments de composition chimique, à l'exception du Titane, ont des effets globalement connus sur les propriétés de l'acier, que ce soit sa trempabilité ou ses caractéristiques mécaniques. Le domaine de composition chimique ainsi défini recouvre l'ensemble des aciers susceptibles de présenter une structure au moins partiellement bainitique et pour lesquels il est souhaitable que la résilience soit bonne.

Les inventeurs ont découvert de façon tout à fait inattendue que, lorsque le Titane était ajouté dans l'acier en utilisant le procédé qui sera décrit plus loin, les propriétés des structures bainitiques étaient très significativement modifiées. En particulier, les inventeurs ont constaté que le Titane ainsi introduit affinait la structure bainitique, c'est à dire diminuait non seulement la taille des grains mais également la dimension des éléments constitutifs de la sous-structure, c'est à dire les dimensions des aiguilles de ferrite et des carbures.

Cet affinement de la structure et de la sous-structure se traduit par un abaissement d'au moins 30°C et typiquement de 60°C de la température de transition de la résilience.

A titre d'exemple les inventeurs ont élaboré un acier B selon l'invention, de composition pondérale (en $10^{-3}$%) :

| C | Si | Mn | Ni | Cr | Mo | Al | Ti | N2 | S | P |
|---|----|----|----|----|----|----|----|----|---|---|
| 183 | 325 | 1390 | 453 | 1395 | 180 | 19 | 25 | 7,8 | 1 | 8 |

Cet acier a été coulé sous forme de brame, laminé à chaud pour fabriquer une tôle d'épaisseur 20 mm. La tôle a été austénitisée à 900°C puis refroidie à l'air, ce qui lui a conféré une structure mixte martensite bainite comportant environ 60% de bainite, dont la résistance à la traction était de 1180MPa.

A titre de comparaison les inventeurs ont également élaboré un acier A selon l'art antérieur de composition pondérale (en $10^{-3}$%) :

| C | Si | Mn | Ni | Cr | Mo | Al | Ti | N2 | S | P |
|---|----|----|----|----|----|----|----|----|---|---|
| 185 | 319 | 1394 | 451 | 1401 | 170 | 18 | 23 | 7,7 | 1 | 9 |

Cet acier a été coulé sous forme de brame, laminé à chaud pour fabriquer une tôle d'épaisseur 20 mm. Cette tôle a été austénitisée a 900°C puis refroidie à l'air, ce qui lui a conféré une structure mixte martensitobainitique comportant environ 60% de Bainite, dont la résistance à la traction était de 1170MPa.

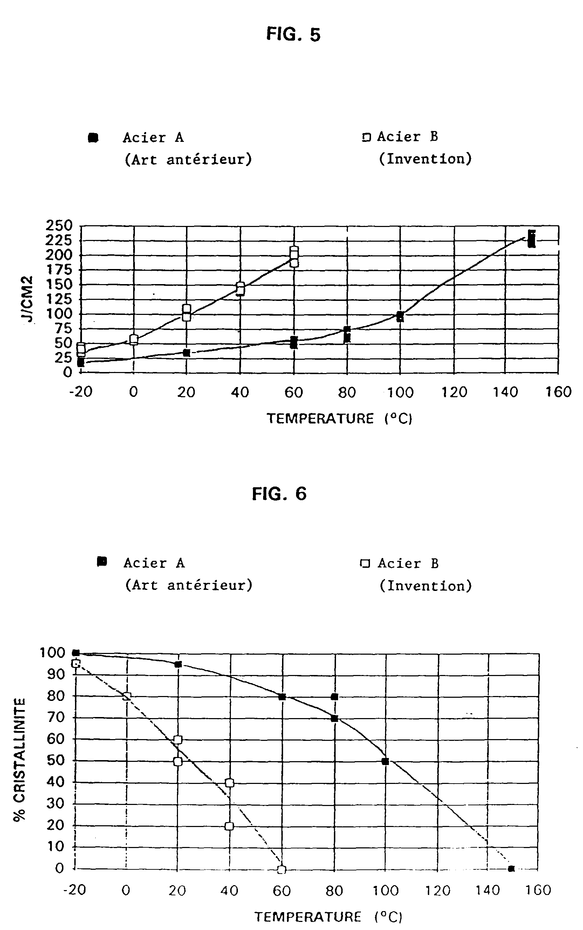

Les deux tôles ont fait l'objet d'essais de résilience Kcv entre 20°C et 160°C. Les figures 5 et 6 qui représentent, pour les aciers A et B, les énergies de ruptures (en J/cm$^2$) et les taux de cristallinité des cassures (en %) montrent que pour l'acier A (selon l'art antérieur) la température de transition TcA correspondant à un taux de cristallinité de 50% est d'environ 100°C alors que pour l'acier B selon l'invention, la température de transition TcB est d'environ 22°C soit un écart de 78°C à l'avantage de l'acier B. Il en résulte que l'énergie de rupture à 20°C de l'acier B est d'environ 100J/cm$^2$ alors qu'elle n'est que de 30J/cm$^2$ environ pour l'acier A. A 60°C, le plateau ductile est atteint avec l'acier B et l'énergie de rupture est d'environ 200 J/cm$^2$ alors que pour l'acier A la rupture est encore à 80% cristalline et l'énergie de rupture n'est que de 55J/cm$^2$.

Un résultat semblable à été obtenu avec les mêmes échantillons à l'état brut de laminage à chaud, après réchauffage des brames à 1160°C, le laminage étant suivi d'un refroidissement à l'air; les résistances mécaniques étaient de 1190MPa pour les deux aciers et la température de transition de résilience était de 90°C pour l'acier A et de 30°C pour l'acier B.

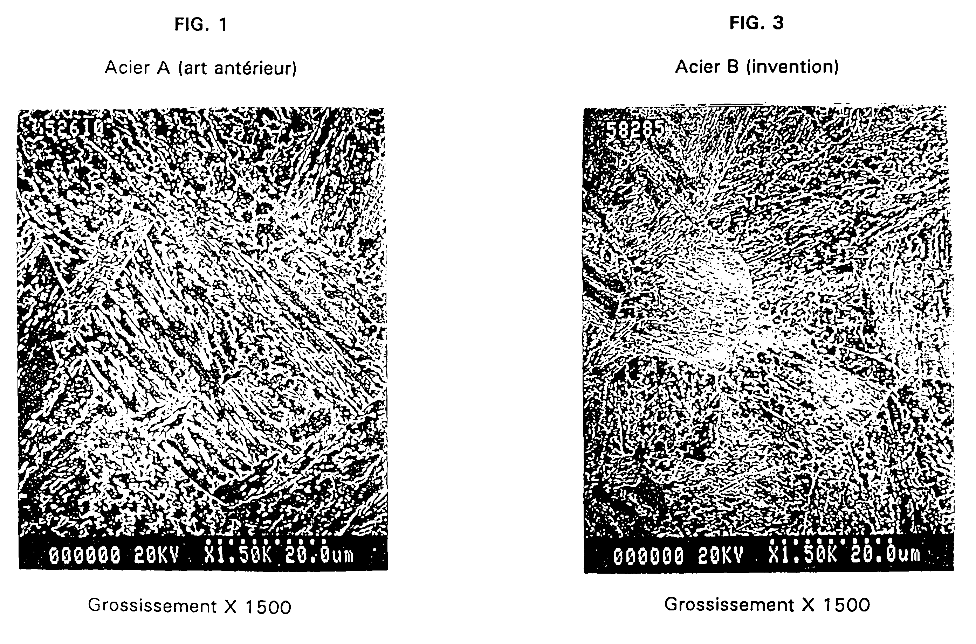

La différence de résilience entre les deux aciers semble provenir d'une différence marquée des tailles des microstructures et sous structures comme le montre les micrographies obtenues par microscope électronique à balayage aux grossissements 1500 et 5000 reproduites aux figures 1, 2, 3 et 4.

A la figure 1, obtenue au grossissement 1500, sur l'acier A (art antérieur) on voit un grain de bainite d'environ 40µm x 40µm, avec sa sous-structure en lattes.

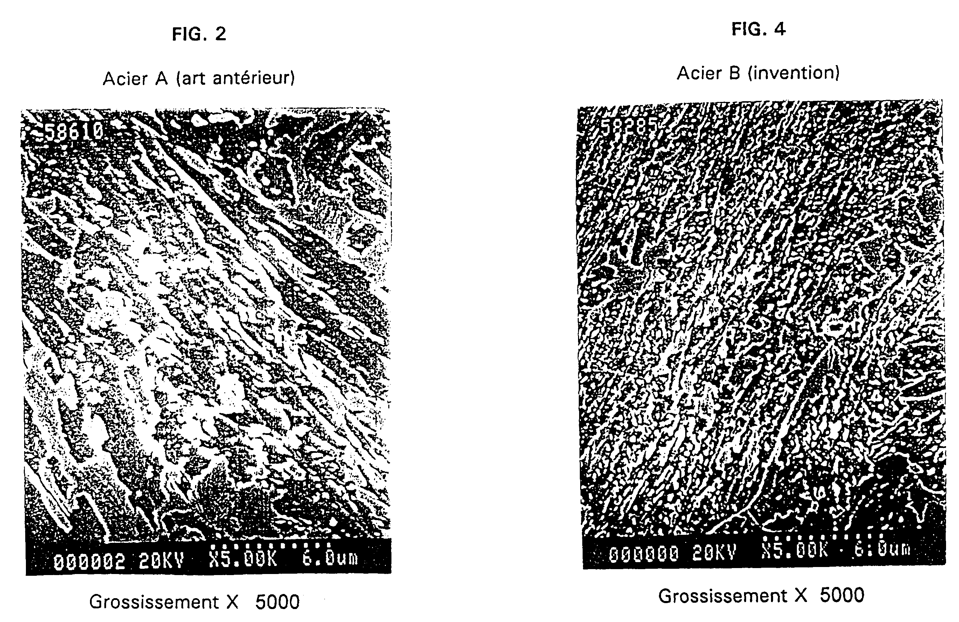

A la figure 2, obtenue également au grossissement 1500 mais sur l'acier B, on voit des grains de bainite d'environ 20 µm x 20 µm, avec leurs sous-structure en lattes.

Les sous-structures en lattes qu'on voit mieux au grossissement 5000 (figures 2 et 4) sont également beaucoup plus fines dans l'acier B que dans l'acier A, alors que les traitements thermiques et les compositions chimiques sont quasiment identiques.

Dans l'acier A comme dans l'acier B, les teneurs en Azote et en Titane sont très voisines et il en est de même des teneurs totales en nitrures de Titane précipité. Cependant des comptages de nitrures de titane sous forme de précipités de taille supérieure à 0,1 µm, réalisés par analyse d'image montrent que la densité est de 108 particules par mm$^2$ pour l'acier A selon l'art antérieur alors qu'elle n'est que de 46 particules par mm$^2$ pour l'acier B selon l'invention, soit 2,3 fois moins. Des dosages de nitrure de Titane précipités ont alors montré que le rapport du nombre de particules de TiN de taille supérieure à 0,1 µm par mm$^2$ à la teneur totale de Titane précipité sous forme de nitrures, exprimée en millièmes de % , était de 5,1 pour l'acier A et seulement de 2,1 pour l'acier B .

Il est connu que les gros nitrures sont obtenus par précipitation dans l'acier liquide alors que le nitrures de Titane qui précipitent dans l'acier solide sont environ 100 fois moins gros et ne sont pas visibles sur les coupes micrographiques observées au grossissement 5000.

Les très petits nitrures de Titane précipités à l'état solide étant très nombreux et la distance moyenne entre précipités voisins étant très faible, les inventeurs on fait l'hypothèse que les très petits nitrures de Titane ralentissent la progression de l'interface entre la phase ferritique et la phase austénitique lors de la transformation bainitique et agissent ainsi notamment sur la sous structure en lattes qui est alors d'autant plus fine que les très petits précipités sont plus proches les uns des autres, c'est à dire plus nombreux.

Les inventeurs ont constaté que ce résultat était reproductible. Ainsi les aciers selon l'invention sont des aciers au Titane dans lesquels le nombre de nitrures de Titane de taille supérieure à 0,1µm ne dépasse pas 4 fois et, en général, pas 3 fois la teneur totale en Titane précipité sous forme de nitrures exprimée en millièmes de %.

Lorsque ces aciers sont traités pour avoir une structure bainitique, leur température de transition de résilience est alors d'au moins 30°C et habituellement d'environ 60°C, inférieure à la température de transition des mêmes aciers sans Titane ou dont le Titane a précipité dans l'acier liquide sous forme de gros nitrures de taille supérieure à 0,1µm., dans une proportion telle que, sur une coupe micrographique, le nombre de particules de TiN de taille supérieure à 0,1µm, par mm$^2$, est sensiblement supérieur à 4 fois la teneur totale en Titane précipité sous forme de nitrures, exprimée en millièmes de %.

A titre d'exemple également, on a élaboré les aciers D et G selon l' invention et à titre de comparaison, les aciers C, E, et F selon l'art antérieur. Les compositions de ces aciers étaient les suivantes (en millièmes de % en poids) :

|   | C | Si | Mn | Ni | Cr | Mo | Al | Ti | N2 | S | P |
|---|---|----|----|----|----|----|----|----|----|---|---|
| C | 68 | 265 | 351 | 109 | 8300 | 950 | 25 | 0 | 11 | 1 | 18 |
| D | 71 | 250 | 363 | 150 | 8450 | 935 | 23 | 32 | 11.5 | 1 | 19 |
| E | 360 | 210 | 520 | 3950 | 1755 | 360 | 18 | 0 | 7,2 | 2 | 12 |
| F | 365 | 255 | 495 | 4030 | 1750 | 355 | 22 | 18 | 6,8 | 1 | 10 |
| G | 368 | 195 | 438 | 3940 | 1810 | 350 | 21 | 20 | 7 | 2 | 10 |

en outre les aciers E, F et G contenaient du Vanadium, dont les teneurs (en millièmes de %): étaient :

E : = 42 ,F : = 38, G : = 40

Les échantillons d'acier C et D étaient austénitisés à 950°C puis refroidis à 120°/heure jusqu'à la température ambiante et avaient une structure bainito-martensitique à dominante bainitique inférieure ; les échantillons d'acier E, F et G ont étés austénitisés à 850°C puis refroidis à 200°/heure jusqu'à la température ambiante et avaient des structures essentiellement bainitiques. Pour les aciers D et G les nombres de particules de nitrure de Titane de taille supérieure à 0,1µm, par millimètres carrés, étaient inférieurs à 4 fois les teneurs totales en titane précipité sous forme de nitrures, exprimée en millièmes de %, alors que pour les aciers C, E, et F cette proportion était supérieure à 5.

Les résistances à la traction et les températures de transition de résilience sur des structures bainitiques étaient :

|   | Rm MPa | Tc |
|---|--------|-----|
| C art antérieur | 1050 | -10°C |
| D invention | 1055 | -65°C |
| E art antérieur | 1540 | + 10°C |
| F art antérieur | 1535 | + 15°C |

(suite)

|  | Rm MPa | Tc |
|---|---|---|
| G invention | 1545 | -35°C |

Pour fabriquer ces aciers qui doivent contenir plus de 0,005% de Titane et plus de 0,003% d'Azote et de préférence entre 0,010% et 0,10% de Titane, entre 0,003% et 0,02% d'Azote, les teneurs en Azote et en Titane étant telle que :

$$(N\%) \times (Ti\%) \leq 0,0016$$

pour limiter la précipitation de nitrures de Titane dans l'acier liquide, on élabore soit par refusion de ferrailles au four électrique, soit par affinage de fonte au convertisseur, soit par tout autre moyen, un acier liquide ne contenant pas de Titane puis on fait diffuser progressivement le Titane dans l'acier liquide à partir d'une phase oxydée contenant du Titane et on coule l'acier pour le faire se solidifier sous forme de lingot de pièce moulée, de brame, de bande mince, de bloom, de billette ou de fil.

Pour faire diffuser le Titane à partir de la phase oxydée contenant du Titane, l'acier doit être désoxydé par une addition d'un élément plus réducteur que le Titane, c'est à dire soit un soit plusieurs éléments pris parmi l'Aluminium, le Calcium, le Cérium, le Zirconium, le Magnésium, le Lithium, le Thorium ou de Béryllium.

A titre d'exemple, on peut élaborer l'acier liquide de façon connue et le verser encore oxydé, c'est à dire contenant environ 0,01 % d'oxygène dissout, dans une poche, puis recouvrir le bain d'acier liquide par un laitier contenant du Titane ou dans lequel on ajoute du Titane sous forme de poudre d'oxyde ou de poudre métallique, puis on désoxyde l'acier liquide par une addition progressive d'au moins 0,02% d'Aluminium, ou de Zirconium, on peut alors brasser l'acier liquide soit en insufflant un gaz neutre tel que l'argon soit par brassage électromagnétique soit par tout autre moyen, pour renouveler la surface de contact de l'acier liquide et du laitier, et enfin, couler l'acier liquide pour le faire se solidifier.

On peut également, élaborer l'acier liquide de façon connue et le verser à l'état non désoxydé dans une poche contenant du Ferrotitane, il se forme alors des oxydes de Titane ; lorsque les oxydes de Titane sont formés, on ajoute un élément plus réducteur que le Titane de façon à dissoudre les oxydes de Titane, puis on coule l'acier pour le faire se solidifier. Dans ce mode de réalisation, les oxydes de Titane ont tendance à décanter, et pour améliorer le rendement de l'addition de Titane, avant désoxydation on peut couvrir la poche par un laitier qui absorbe une partie des oxydes de Titane ; le laitier se charge alors en Titane et cet élément repasse progressivement dans l'acier liquide au cours de la désoxydation.

Le Titane peut également être introduit par une poudre de couverture utilisée par exemple en Coulée continue.

Lorsque l'acier est élaboré, par exemple, au convertisseur, sa teneur en Azote est en général beaucoup plus faible que lorsqu'il est élaboré au four électrique. On peut alors, après introduction du Titane, augmenter la teneur en Azote par exemple en brassant l'acier liquide à l'aide d'Azote gazeux ou d'un mélange d'Azote et d'un gaz neutre tel que l'Argon.

Par ce procédé on peut fabriquer des pièces en acier tels que des pièces moulées, des pièces forgées, des tôles, des bandes, des barres, des profilés, des poutrelles, des rails, des fils ou tout autre produit sidérurgique dont la composition chimique est conforme à l'invention et qui, lorsqu'il a une structure contenant au moins 30% de bainite obtenue de façon connue par l'Homme du métier, a une température de transition en résilience plus basse d'au moins 30°C et typiquement plus basse de 60°C par rapport à la température de transition obtenue sur des produits de même composition, et même structure micrographique, mais obtenus par une élaboration de l'acier selon l'art antérieur.

Il est à noter que parfois l'acier selon l'invention peut contenir en outre un peu de Titane précipité sous forme d'oxydes .

## Revendications

1.  Procédé d'élaboration d'un acier au titane contenant plus de 0,003 % en poids d'azote et plus de 0,005 % en poids de titane caractérisé en ce que :

    -   on élabore un acier liquide non désoxydé contenant plus de 0,003% en poids d'azote et ne contenant pas de titane,
    -   puis on verse l'acier liquide non désoxydé dans une poche et on recouvre le bain d'acier liquide par un laitier ou une poudre de couverture contenant du titane oxydé,
- puis on désoxyde le bain d'acier liquide par addition d'un élément plus réducteur que le titane,
- puis on renouvelle la surface de contact de l'acier liquide et du laitier ou de la poudre de couverture par un brassage de l'acier liquide, de façon à obtenir un acier contenant plus de 0,003 % en poids d'azote et plus de 0,005 % en poids de titane, les teneurs en azote et titane étants telles que:

$$(N \%) \times (Ti \%) \leq 0,0016$$

- puis on fait solidifier l'acier.

2. Procédé selon la revendication 1 caractérisé en ce que le brassage est effectué à l'aide d'azote gazeux ou d'un mélange d'azote et d'un gaz neutre tel que l'argon.

3. Procédé d'élaboration d'un acier au titane contenant plus de 0,003 % en poids d'azote et plus de 0,005 % en poids de titane caractérisé en ce que :

- on élabore un acier liquide non désoxydé contenant plus de 0,003% en poids d'azote et ne contenant pas de titane,
- puis on verse l'acier liquide non désoxydé dans une poche et on ajoute du titane sous forme de ferrotitane dans l'acier liquide non désoxydé,
- puis on ajoute dans l'acier liquide au moins un élément plus réducteur que le titane, de façon à obtenir un acier contenant plus de 0,003 % en poids d'azote et plus de 0,005 % en poids de titane, les teneurs en azote et titane étants telles que :

$$(N \%) \times (Ti \%) \leq 0,0016$$

- puis on fait solidifier l'acier.

4. Procédé selon la revendication 3 caractérisé en ce que, avant d'ajouter de titane dans l'acier liquide non désoxydé, on recouvre l'acier liquide d'un laitier.

5. Procédé selon la revendication 3 ou la revendication 4 caractérisé en ce que, après l'ajout d'au moins un élément plus réducteur que le titane, on brasse l'acier liquide à l'aide d'azote gazeux ou d'un mélange d'azote et d'un gaz neutre tel que l'argon.

6. Acier obtenu par le procédé selon l'une quelconque des revendications 1 à 5 caractérisé en ce qu'il contient, en poids, plus de 0,005% de Titane et plus de 0,003% d'Azote, les teneurs en Titane et Azote étant telles que :

$$(N\%) \times (Ti\%) \leq 0,0016$$

et en ce que, à l'état solide, le nombre de précipités de nitrure de Titane de taille supérieure à 0,1 $\mu$m comptés sur une aire de 1mm$^2$ d'une coupe micrographique est inférieur à 4 fois la teneur totale en Titane précipité sous forme de nitrures exprimée en millièmes de % en poids.

7. Acier selon la revendication 6 caractérisé en ce que le nombre de précipités de nitrure de Titane de taille supérieure à 0,1$\mu$m comptés sur une aire de 1mm$^2$ d'une coupe micrographique est inférieur à 3 fois la teneur totale en Titane précipité sous forme de nitrures exprimée en millièmes de % en poids.

8. Acier selon la revendication 6 ou la revendication 7 caractérisé en ce qu'il contient plus de 0,01 % en poids d'au moins un élément pris parmi Aluminium et Zirconium, mais moins de 0,5 % en poids d'Aluminium et moins de 0,5 % en poids de Zirconium.

9. Acier selon l'une quelconque des revendications 6 à 8 caractérisé en ce que sa composition chimique, en poids, satisfait aux relations :

$$0,003\% \leq N \leq 0,02\%$$

$$0,010\% \leq Ti \leq 0,1\%$$

$$(N\%)x(Ti\%) \leq 0,0016$$

**10.** Acier selon l'une quelconque des revendications 6 à 9 caractérisé en ce que sa composition chimique, en poids, comprend :

$$0,04\% \leq C \leq 0,80\%$$

$$0\% \leq Si \leq 2\%$$

$$0\% \leq Mn \leq 3\%$$

$$0\% \leq Ni \leq 10\%$$

$$0\% \leq Cr \leq 10\%$$

$$0\% \leq Mo \leq 3\%$$

$$0\% \leq Cu \leq 2\%$$

$$0\% \leq V \leq 1\%$$

$$0\% \leq Nb \leq 0,5\%$$

$$0\% \leq W \leq 3\%$$

$$0\% \leq S \leq 0,2\%$$

$$P \leq 0,03\%$$

et éventuellement au moins un élément pris parmi ; Ca, Mg, Se, Te, Bi, et B en des teneurs inférieures à 0,1%, le reste étant du fer et des impuretés résultant de l'élaboration.

**11.** Pièce ou produit sidérurgique en acier selon la revendication 10 caractérisée en ce que sa structure est constituée d'au moins 30% de bainite.

**Patentansprüche**

**1.** Verfahren zur Herstellung eines titanhaltigen Stahles, der mehr als 0,003 Gew.-% Stickstoff und mehr als 0,005

% Gew.-% Titan enthält, dadurch gekennzeichnet, dass:

- ein nicht desoxidierter flüssiger Stahl hergestellt wird, der mehr als 0,003 Gew.-% Stickstoff und kein Titan enthält,
- danach der nicht desoxidierte flüssige Stahl in eine Pfanne gefüllt wird und das flüssige Stahlbad mit einer Schlacke oder einem Deckpulver, die oxidiertes Titan enthalten, bedeckt wird,
- danach das flüssige Stahlbad desoxidiert wird durch Zugabe eines Elementes, das stärker reduzierend ist als Titan,
- danach die Kontaktoberfläche des flüssigen Stahles und der Schlacke oder des Deckpulvers durch Rühren des flüssigen Stahles ständig erneuert wird, derart, dass ein Stahl erhalten wird mit mehr als 0,003 Gew.-% Stickstoff und mehr als 0,005 Gew.-% Titan, wobei die Gehalte an Stickstoff und Titan derart sind, dass gilt:

$$(N\%) \times (Ti\%) \leq 0,0016,$$

- wonach man den Stahl erstarren läßt.

2. Verfahren nach Anspruch 1, dadurch gekennzeichnet, dass das Rühren mit Hilfe von gasförmigem Stickstoff oder einer Mischung aus Stickstoff und einem Neutralgas, wie z. B. Argon, durchgeführt wird.

3. Verfahren zur Herstellung eines titanhaltigen Stahles, der mehr als 0,003 Gew.-% Stickstoff und mehr als 0,005 Gew.-% Titan enthält, dadurch gekennzeichnet, dass:

- ein nicht desoxidierter flüssiger Stahl hergestellt wird, der mehr als 0,003 Gew.-% Stickstoff und kein Titan enthält,
- danach der nicht desoxidierte flüssige Stahl in eine Pfanne gefüllt wird und Titan in Form von Ferrotitan dem nicht desoxidierten flüssigen Stahl zugegeben wird,
- danach dem flüssigen Stahl wenigstens ein Element zugegeben wird, das stärker reduzierend ist als Titan, sodass ein Stahl erhalten wird, der mehr als 0,003 Gew.-% Stickstoff und mehr als 0,005 Gew.-% Titan enthält, wobei die Gehalte an Stickstoff und Titan derart sind, dass gilt:

$$(N\%) \times (Ti\%) \leq 0,0016$$

- wonach man den Stahl erstarren läßt.

4. Verfahren nach Anspruch 3, dadurch gekennzeichnet, dass vor der Zugabe des Titans zu dem nicht desoxidiertem flüssigen Stahl der flüssige Stahl mit einer Schlacke bedeckt wird.

5. Verfahren nach Anspruch 3 oder 4, dadurch gekennzeichnet, dass nach der Zugabe wenigstens eines Elementes, das stärker reduzierend ist als Titan, der flüssige Stahl gerührt wird mit Hilfe von gasförmigem Stickstoff oder eines Gemisches aus Stickstoff mit einem Neutralgas, wie z. B. Argon.

6. Stahl, der nach dem Verfahren einer der Ansprüche 1 bis 5 erhalten ist, dadurch gekennzeichnet, dass er in Gewichtsprozenten mehr als 0,005 % Titan und mehr als 0,003 % Stickstoff aufweist, wobei die Gehalte an Titan und Stickstoff derart sind, dass gilt:

$$(N\%) \times (Ti\%) \leq 0,0016$$

und dass im festen Zustand die Zahl der ausgefällten Titannitride mit einer Größe von mehr als 0,1 μm gezählt auf einer Fläche von 1 mm$^2$ eines mikrographischen Schnittes kleiner ist als 4 mal der Gesamtgehalt an ausgefälltem Titan in Form von Nitriden, ausgedrückt in Tausendstel Gewichtsprozenten.

7. Stahl nach Anspruch 6, dadurch gekennzeichnet, dass die Anzahl der ausgefällten Titannitride mit einer Größe von mehr als 0,1 μm gezählt auf einer Fläche von 1 mm$^2$ eines mikrographischen Schnittes kleiner ist als 3 mal der Gesamtgehalt an ausgefälltem Titan in Form von Nitriden, ausgedrückt in Tausendstel Gewichtsprozenten.

8. Stahl nach Anspruch 6 oder 7, dadurch gekennzeichnet, dass er mehr als 0,01 Gew.-% wenigstens eines Elementes enthält, das ausgewählt ist aus Aluminium und Zirkon, jedoch weniger als 0,5 Gew.-% Aluminium und weniger als 0,5 Gew.-% Zirkon.

9. Stahl nach einem der Ansprüche 6 bis 8, dadurch gekennzeichnet, dass seine chemische Zusammensetzung in Gewichtsprozenten die folgenden Beziehungen erfüllt:

$$0,003 \% \leq N \leq 0,02 \%$$

$$0,010 \% \leq Ti \leq 0,1 \%$$

$$(N\%) \times (Ti\%) \leq 0,0016$$

10. Stahl nach einem der Ansprüche 6 bis 8, dadurch gekennzeichnet, dass seine chemische Zusammensetzung in Gewichtsprozenten enthält:

$$0,04 \% \leq C \leq 0,80\%$$

$$0 \% \leq Si \leq 2 \%$$

$$0 \% \leq Mn \leq 3 \%$$

$$0 \% \leq Ni \leq 10 \%$$

$$0 \% \leq Cr \leq 10 \%$$

$$0 \% \leq Mo \leq 3 \%$$

$$0 \% \leq Cu \leq 2 \%$$

$$0 \% \leq V \leq 1 \%$$

$$0 \% \leq Nb \leq 0,5 \%$$

$$0 \% \leq W \leq 3 \%$$

$$0 \% \leq S \leq 0,2 \%$$

$$P \leq 0,03 \%$$

und gegebenenfalls wenigstens ein Element, das ausgewählt ist aus Ca, Mg, Se, Te, Bi und B, mit Gehalten von weniger als 0,1 %, Rest Eisen und aus der Verarbeitung stammende Verunreinigungen.

**11.** Teil oder Gegenstand aus Stahl nach Anspruch 10, dadurch gekennzeichnet, dass seine Struktur wenigstens zu 30 % aus Bainit besteht.

**Claims**

1. Process for smelting a titanium steel containing more than 0.003% by weight of nitrogen and more than 0.005% by weight of titanium, characterized in that

   - an undeoxidized liquid steel containing more than 0.003% by weight of nitrogen and containing no titanium is smelted;
   - the undeoxidized liquid steel is then poured into a ladle and the bath of liquid steel is covered with a slag or a cover powder containing oxidized titanium;
   - the bath of liquid steel is then deoxidized by adding an element which is more reducing than titanium;
   - the contact surface between the liquid steel and the slag or the cover powder is then renewed by agitating the liquid steel, so as to obtain a steel containing more than 0.003% by weight of nitrogen and more than 0.005% by weight of titanium, the nitrogen and titanium contents being such that:

$$(\%N) \times (\%Ti) \leq 0.0016$$

   - and then the steel is solidified.

2. Process according to Claim 1, characterized in that the agitation is carried out using gaseous nitrogen or a mixture of nitrogen and of an inert gas such as argon.

3. Process for smelting a titanium steel containing more than 0.003% by weight of nitrogen and more than 0.005% by weight of titanium, characterized in that:

   - an undeoxidized liquid steel containing more than 0.003% by weight of nitrogen and containing no titanium is smelted;
   - the undeoxidized liquid steel is then poured into a ladle and titanium in the form of ferrotitanium is added to the undeoxidized liquid steel;
   - then at least one element which is more reducing than titanium is added to the liquid steel so as to obtain a steel containing more than 0.003% by weight of nitrogen and more than 0.005% by weight of titanium, the nitrogen and titanium contents being such that

$$(\%N) \times (\%Ti) \leq 0.0016$$

   - and then the steel is solidified.

4. Process according to Claim 3, characterized in that, before adding titanium to the undeoxidized liquid steel, the liquid steel is covered with a slag.

5. Process according to Claim 3 or Claim 4, characterized in that, after adding at least one element which is more reducing than titanium, the liquid steel is agitated with gaseous nitrogen or with a mixture of nitrogen and an inert gas such as argon.

6. Steel obtained by the process according to any one of Claims 1 to 5, characterized in that it contains, by weight, more than 0.005% of titanium and more than 0.003% of nitrogen, the titanium and nitrogen contents being such that:

$$(\%N) \times (\%Ti) \leq 0.0016$$

and in that, in the solid state, the number of titanium nitride precipitates having a size greater than 0.1 μm, measured over an area of 1 mm$^2$ in a micrographic section, is less than 4 times the total content of titanium precipitated in the form of nitrides, expressed in thousandths of % by weight.

7. Steel according to Claim 6, characterized in that the number of titanium nitride precipitates having a size greater than 0.1 µm, measured over an area of 1mm$^2$ in a micrographic section, is less than 3 times the total content of the titanium precipitated in the form of nitrides, expressed in thousandths of % by weight.

8. Steel according to Claim 6 or Claim 7, characterized in that it contains more than 0.01% by weight of at least one element taken from aluminium and zirconium, but less than 0.5% by weight of aluminium and less than 0.5% by weight of zirconium.

9. Steel according to any one of Claims 6 to 8, characterized in that its chemical composition, by weight, satisfies the relationships:

$$0.003\% \leq N \leq 0.02\%$$

$$0.010\% \leq N \leq 0.1\%$$

$$(\%N) \times (\%Ti) \leq 0.0016$$

10. Steel according to any one of Claims 6 to 9, characterized in that its chemical composition, by weight, comprises:

$$0.04\% \leq C \leq 0.80\%$$

$$0\% \leq Si \leq 2\%$$

$$0\% \leq Mn \leq 3\%$$

$$0\% \leq Ni \leq 10\%$$

$$0\% \leq Cr \leq 10\%$$

$$0\% \leq Mo \leq 3\%$$

$$0\% \leq Cu \leq 2\%$$

$$0\% \leq V \leq 1\%$$

$$0\% \leq Nb \leq 0.5\%$$

$$0\% \leq W \leq 3\%$$

$$0\% \leq S \leq 0.2\%$$

$$P \leq 0.03\%$$

and optionally at least one element taken from: Ca, Mg, Se, Te, Bi and B in amounts less than 0.1%, the balance being iron and impurities resulting from the smelting.

**11.** Ferrometallurgical component or product made of steel according to Claim 10, characterized in that its structure consists of at least 30% of bainite.

FIG. 3

Acier B (invention)

Grossissement X 1500

FIG. 1

Acier A (art antérieur)

Grossissement X 1500

14

## FIG. 2

Acier A (art antérieur)

Grossissement X 5000

## FIG. 4

Acier B (invention)

Grossissement X 5000

EP 0 714 995 B1

## FIG. 5

■ Acier A            □ Acier B
(Art antérieur)        (Invention)

## FIG. 6

■ Acier A            □ Acier B
(Art antérieur)        (Invention)

16